# EUROPÄISCHE PATENTSCHRIFT

(11) **EP 0 832 371 B1**
(45) Veröffentlichungstag und Bekanntmachung des Hinweises auf die Patenterteilung: **08.08.2001**
(21) Anmeldenummer: 96922804.8
(22) Anmeldetag: 13.06.1996
(51) Int. Cl.: F16D 65/14, F16D 65/38

(54) **ZUSPANNVORRICHTUNG FÜR EINE FAHRZEUGBREMSE UND VERFAHREN ZUM BETREIBEN EINER FAHRZEUGBREMSE**
VEHICLE BRAKE APPLICATION DEVICE AND METHOD OF OPERATING A VEHICLE BRAKE
DISPOSITIF D'APPLICATION DU FREIN D'UN VEHICULE ET PROCEDE PERMETTANT DE FAIRE FONCTIONNER UN FREIN D'UN VEHICULE

(30) Priorität: 13.06.1995 DE 19521401
(43) Veröffentlichungstag der Anmeldung: 01.04.1998
(73) Patentinhaber: Meritor Automotive, Inc., Troy, Michigan 48084 (US)
(72) Erfinder: KNOOP, Dietmar, D-56218 Mülheim-Kärlich (DE)
(74) Vertreter: Sties, Jochen, Dipl.-Ing.
(86) Internationale Anmeldenummer: EP9602560
(87) Internationale Veröffentlichungsnummer: WO9641969

(56) Entgegenhaltungen:
- DE-A- 3 326 374
- DE-A- 4 212 407
- FR-A- 2 089 661
- US-A- 4 428 462
- US-A- 4 602 702

## Beschreibung

Die Erfindung betrifft eine Zuspannvorrichtung für eine Fahrzeugbremse, insbesondere für eine druckluftbetätigte Trommel- oder Scheibenbremse, gemäß dem Oberbegriff des Anspruchs 1.

Aus der DE-AS 17 75 327 ist eine hydraulisch zu betätigende Teilbelagscheibenbremse bekannt, die eine von der hydraulischen Betätigungsvorrichtung der Bremse unabhängige, mechanische Nachstellvorrichtung aufweist. Die Nachstellvorrichtung dient dazu, bei Belagverschleiß die Reibbeläge so weit in Richtung auf die Scheibe nachzustellen, daß kein zu großes Spiel zwischen der Reibfläche des Belages und der zugewandten, rotierenden Bremsscheibenfläche entsteht. Die Nachstellvorrichtung besteht aus zwischen dem Bremskolben und dem Reibbelag angeordneten, keilförmigen Platten, die gegeneinander verschiebbar sind. Die Neigung der keilförmigen Platten ist so gewählt, daß eine selbsthemmende Wirkung erzielt wird.

Bei allen Fahrzeugbremsen, bei denen während eines Bremsvorgangs Reibbeläge mit einem abzubremsenden Glied der Fahrzeugbremse in Berührung treten, um eine Bremsung zu erreichen, haben die Reibbeläge im unbetätigten Zustand der Bremse einen gewissen Abstand von dem abzubremsenden Glied, das beispielsweise eine Bremstrommel oder eine Bremsscheibe sein kann. Dieser Abstand, der auch als Bremslüftspiel bezeichnet wird, sorgt dafür, daß im unbetätigten Zustand der Bremse kein unnötiger Reibwiderstand überwunden werden muß und verhindert auch, daß die Bremse unbeabsichtigt heißläuft. Beim Betätigen der Bremse muß dieses Bremslüftspiel zuerst überwunden werden, bevor die Reibbeläge in einen bremsenden Eingriff mit z.B. einer Bremsscheibe oder einer Bremstrommel geraten. Dies geschieht heutzutage mittels einer in der Fahrzeugbremse ohnehin vorhandenen Betätigungsanordnung, die beispielsweise einen hydraulisch betätigten Kolben oder einen druckluftbetätigten Membranzylinder mit einem nachgeschalteten Stößel oder einem Gestänge umfassen kann. Die Betätigungsanordnung überträgt eine in die Fahrzeugbremse eingeleitete Bremsbetätigungskraft, die beispielsweise von einem Fahrzeugführer auf ein Bremspedal ausgeübt worden ist, auf die Reibbeläge der Fahrzeugbremse, um diese gegen das abzubremsende Glied der Bremse zu pressen.

Konstruktionsbedingt ist der Hub von Betätigungsanordnungen beschränkt, und je größer dieser Hub sein soll, um so größer ist auch die Betätigungsanordnung. In jedem Fall muß der Hub so groß sein, daß er zur Überwindung des Bremslüftspiels und zum anschließenden Anpressen der Reibbeläge gegen das abzubremsende Glied mit einer gewünschten Kraft ausreicht. Im allgemeinen wird der Hub der Betätigungsanordnung nicht im Verhältnis 1:1 an die Reibbeläge weitergegeben, sondern es ist zur Bremskraftverstärkung eine Übersetzung zwischen dem Eingang der Betätigungsanordnung und deren Ausgang vorgesehen, die bis zu 1:20 reichen kann. Zieht man als Beispiel eine druckluftbetätigte Scheibenbremse für einen Lastkraftwagen oder einen Omnibus heran, so liegt der Betätigungshub am Eingang der Betätigungsanordnung üblicherweise im Bereich von maximal 57 mm oder von maximal 75 mm, je nach dem, ob es sich um einen druckluftbetätigten Normalhubmembranzylinder oder einen Langhubmembranzylinder handelt. Bei einer angenommenen Übersetzung von 1:20 bedeutet dies, daß an den Reibbelägen nur etwa 2,8 mm bzw. 3,8 mm im Fall eines Langhubmembranzylinders als Betätigungsweg zur Verfügung stehen. Berücksichtigt man, daß das Bremslüftspiel bei Bremsen dieser Art normalerweise ungefähr 0,35 mm pro Reibbelag beträgt, daß sich desweiteren bei hohen Zuspannkräften die Reibbeläge zusammendrücken (Reibbelagkompressibilität ca. 0,4 mm pro Reibbelag) und bestimmte Bremsenbauteile (z.B. ein Schwimmsattel oder Schwimmrahmen) sich verformen (Rahmendeformation 1 mm bis 1,5 mm) und daß die Bremse darüberhinaus noch eine gewisse Hubreserve haben sollte, dann ist klar, daß die Betätigungsanordnungen zur Sicherstellung einer ordnungsgemäßen Funktion relativ große Hübe aufweisen müssen.

Hinsichtlich des Bremslüftspiels steht ein Bremsenkonstrukteur desweiteren vor entgegengesetzt gerichteten Anforderungen. Zum einen soll das Bremslüftspiel relativ groß sein, damit auch dann, wenn die Bremse beispielsweise nach langer Bergabfahrt eine sehr hohe Betriebstemperatur erreicht hat und sich die Reibbeläge aufgrund der Erwärmung entsprechend ausgedehnt haben (thermisches Quellen), sich noch ein ausreichend großes Bremslüftspiel einstellt, nachdem die Fahrzeugbremse gelöst worden und in den unbetätigten Zustand zurückgekehrt ist. Zum anderen soll das Bremslüftspiel möglichst klein sein, um mit dem konstruktiv zur Verfügung stehenden Betätigungshub ausreichend hohe Anpreßkräfte realisieren zu können und um den Totgang im Betätigungsorgan, etwa einem Bremspedal, möglichst gering zu halten, damit die als unangenehm empfundene Ansprechverzögerung der Bremsanlage klein bleibt. Bei druckluftbetätigten Bremsen, wie sie insbesondere bei Lastkraftwagen und Omnibussen zum Einsatz kommen, verringert ein kleines Bremslüftspiel zudem den zur Bremsbetätigung erforderlichen Druckluftverbrauch.

Aus der DE-A-33 26 374 ist eine Fahrzeugbremse mit einem Bremskraftmotor und einem Hilfskraftmotor bekannt, die beide als Druckluftzylinder ausgebildet sein können. Bei dieser bekannten Bremse wird zu Bremsbeginn zunächst der Hilfskraftmotor voreilend zum Bremskraftmotor betätigt und verkleinert das Lüftspiel bis zum Anlegen der Reibelemente an die Bremsscheibe. Danach spannt der Bremskraftmotor die Fahrzeugbremse zur eigentlichen Bremsung fest zu. Nach der Bremsung stellt der Hilfskraftmotor die Reibelemente wieder soweit zurück, bis ein fest vorgegebenes Soll-Lüftspiel erreicht ist.

Aus der US-A-4 602 702 ist eine ähnlich funktionierende Fahrzeugbremse bekannt, bei der eine elektromotorisch drehangetriebene Spindel über einen Schwenkhebel den Reibbelag in Richtung der Bremsscheibe drückt, bis das vorhandene Lüftspiel im wesentlichen überwunden ist. Die eigentliche Bremskraft wird von einem Stapel aus Piezoelementen aufgebracht, der sich bei elektrischer Erregung etwas ausdehnt und dessen Längenänderung über den genannten Hebel auf den Reibbelag übertragen wird.

Nach einer Bremsung stellt die elektromotorisch angetriebene Spindel den Reibbelag wieder zurück, bis ein vorbestimmter Abstand zwischen dem Reibbelag und der Bremsscheibe erzielt ist.

Die US-A-4 428 462 beschreibt eine hydraulische Fahrzeugscheibenbremse, bei der die Betätigungseinheit mit einer sogenannten Schnellfüllstufe ausgestattet ist, die zu Beginn eines Bremsvorgangs das vorhandene Bremslüftspiel durch eine vergrößerte Zufuhr von Hydraulikfluid schnell überwindet. Hierzu weist die Betätigungseinheit zwei miteinander gekoppelte Kolben auf, von denen sich zu Beginn einer Bremsbetätigung nur der kleinere Kolben zur Überwindung des Bremslüftspieles verschiebt. Erst nach Erreichen eines bestimmten Hydraulikdrucks werden beide Kolben gemeinsam verschoben und pressen den Reibbelag zum Abbremsen gegen die Bremsscheibe.

Der Erfindung liegt die Aufgabe zugrunde, eine Zuspannvorrichtung für eine Fahrzeugbremse und eine mit einer solchen Zuspannvorrichtung ausgerüstete Fahrzeugbremse bereitzustellen, mit der es ermöglicht ist, immer ein optimales Bremslüftspiel sicherzustellen.

Diese Aufgabe ist erfindungsgemäß durch eine Zuspannvorrichtung für eine Fahrzeugbremse gelöst, die die im Anspruch 1 angegebenen Merkmale aufweist. Bei der erfindungsgemäßen Zuspannvorrichtung wird somit nach einer Bremsung der vom Bremslüftspielsteller bewirkte Rückhub in Abhängigkeit der Temperatur der Reibbeläge und/oder der Temperatur des abzubremsenden Bremsengliedes (üblicherweise Bremsscheibe bzw. Bremstrommel) ausgeführt.

Erfindungsgemäß ist es somit möglich, das Bremslüftspiel und damit den Totgang der Bremse immer sehr klein zu halten, da bei dem Bremslüftspielsteller der erfindungsgemäßen Zuspannvorrichtung der Vorhub, d.h. der zum Herstellen eines Bremslüftspieles Null erforderliche Hub, nicht gleich dem Rückhub sein muß. Erfindungsgemäß kann der Rückhub in Abhängigkeit der Erwärmung der Fahrzeugbremse größer gewählt werden, derart, daß immer ein vorgegebenes, kleines Bremslüftspiel nach dem Lösen der Bremse eingestellt wird und damit sichergestellt ist, daß die Reibbeläge auch nach einer extremen Bremsenbeanspruchung und der daraus resultierenden Expansion der Reibbeläge (thermisches Reibbelagquellen) nicht mehr an der Bremsscheibe oder der Bremstrommel schleifen, nachdem die Bremse gelöst worden ist. Des weiteren kann das thermische Verformungsverhalten einer Bremsscheibe, das sog. Schirmungsverhalten, berücksichtigt werden. Bei einer heißgebremsten Bremsscheibe bewegt sich nämlich deren freier Rand nach Art eines Schirms aus der Bremsscheibenebene heraus, was unter Fachleuten als "Schirmung" bekannt ist. In gleicher Weise kann auf einfachste Art ein Ausgleich für den beim Bremsen aufgetretenen Reibbelagverschleiß erreicht werden.

Bei bevorzugten Ausgestaltungen der erfindungsgemäßen Zuspannvorrichtung weist der Bremslüftspielsteller eine Spreizeinheit auf, die mechanisch, pneumatisch, hydraulisch oder elektrisch betätigt wird. Selbstverständlich sind auch Kombinationen der vorgenannten Betätigungsarten möglich, beispielsweise eine elektromechanische, elektropneumatische, oder elektrohydraulische Betätigung. So kann zur Betätigung der Spreizeinheit, die den zum Überkommen des Bremslüftspiels erforderlichen Hub bereitstellt, beispielsweise ein Druckluftzylinder, ein Druckluftmotor, ein mechanisches Getriebe, ein Elektromotor, insbesondere ein elektrischer Schrittmotor, ein Elektromagnet, ein Hydraulikzylinder oder auch ein Hydraulikmotor benutzt werden. Falls gewünscht, kann dabei auch gleichzeitig eine Kraftverstärkung erzielt werden, die das nachfolgende Abbremsen unterstützt. Ebenso können zur Betätigung der Spreizeinheit Energiespeicher herangezogen werden, beispielsweise eine Feder, Druckluft aus einem Druckbehälter, Unterdruck oder ein unter Druck stehendes Hydraulikmedium.

Erfindungsgemäß ist die Betätigung des Bremslüftspielstellers bzw. seiner Spreizeinheit so ausgestaltet, daß eine Bremsanforderung erkannt und daraufhin der Bremslüftspielsteller bzw. seine Spreizeinheit in Aktion gesetzt wird. Das Erkennen einer Bremsanforderung, die beispielsweise von einem Fahrzeugführer durch einen Tritt auf ein Bremspedal ausgelöst wird, kann z.B. über ein geeignet mit dem Bremspedal gekoppeltes Gestänge, einen damit verbundenen elektrischen Schalter, ein Potentiometer, berührungslos arbeitende Sensoren, einen pneumatisch/elektrischen Druckschalter und ähnliches geschehen. Sofern das Betätigungsorgan der Bremsanlage auf ein hydraulisches oder pneumatisches System einwirkt, kann auch der durch die Betätigung hervorgerufene Druckanstieg zur Ansteuerung des Bremslüftspielstellers verwendet werden. Ebenso kann ein Mikroprozessor vorhanden sein, in dem ein vorgegebener Schwellenwert abgelegt ist, bei dessen Erreichen der Bremslüftspielsteller damit beginnt, das Bremslüftspiel gegen Null zu fahren. Der Mikroprozessor kann ein entsprechendes Eingangssignal beispielsweise von einem elektrischen Schalter, einem Potentiometer, einem Sensor oder einer ähnlichen Einrichtung erhalten. Einrichtungen der genannten Art sind im Zusammenhang mit elektronischen Bremssystemen (ELB) bereits bekannt und können auch im Rahmen der vorliegenden Erfindung eingesetzt werden.

Die Spreizeinheit des Bremslüftspielstellers der erfindungsgemäßen Zuspannvorrichtung kann z.B. als Spindelanordnung, Exzenteranordnung, Hebelanordnung, Stellkeilanordnung, Spindel/Mutter-Anordnung, Spindel/Zahnstangen-Anordnung, Spindel/Zahnrad-Anordnung, Spindel/Riemen-Anordnung oder Spindel/Ketten-Anordnung ausgestaltet sein.

Bevorzugte Ausführungsbeispiele der erfindungsgemäßen Zuspannvorrichtung weisen einen Bremslüftspielsteller mit integrierter Reibbelag-Verschleißausgleichseinrichtung auf. In herkömmlichen Trommel- und Scheibenbremsen sind häufig Spreizeinheiten vorhanden, die eine automatische Belagverschleißnachstellung bewirken, beispielsweise Spindel/Mutter-Anordnungen, Zahnstangen-Anordnungen, Reibschlußgleitelemente, miteinander gekoppelte Primär- und Sekundärkolben oder auch ein elektrischer Schrittmotor. Sind solche Spreizeinheiten vorhanden, so können diese mit einem von der Betätigungsanordnung der Bremse funktionell unabhängigen Aktuator versehen werden, um auf einfache Weise einen separat betätigbaren Bremslüftspielsteller im Sinne der vorliegenden Erfindung zu erhalten.

Gemäß einer einfachen Ausführungsform der erfindungsgemäßen Lösung wird als Bremslüftspielsteller ein elektrischer Schrittmotor eingesetzt, der beispielsweise über eine Schraubspindel mit dem oder den Reibbelägen verbunden ist und der elektrisch angesteuert wird.

Zur besseren Erläuterung der erfindungsgemäßen Lösung sind im folgenden zwei Diagramme wiedergegeben. Es zeigt:
- Fig.1a: verschiedene Fahrerbremsanforderungen aufgetragen über die Zeit,
- Fig.1b: den sich während der Bremsvorgänge gemäß Fig.la ergebenden Reibbelagverschleiß in stark überhöhter Darstellung ebenfalls über die Zeit aufgetragen,
- Fig.1c: das Bremslüftspiel während der Abfolge von Bremsvorgängen gemäß Fig.la in Abhängigkeit der Zeit,
- Fig.1d: den für Bremsvorgänge gemäß Fig.la erforderlichen Hubweg einer Betätigungsanordnung bei einer herkömmlichen Fahrzeugbremse sowie bei einer mit einer erfindungsgemäßen Zuspannvorrichtung ausgerüsteten Fahrzeugbremse, und
- Fig.2: ein Ablaufdiagramm eines Ausführungsbeispiels des erfindungsgemäßen Verfahrens.

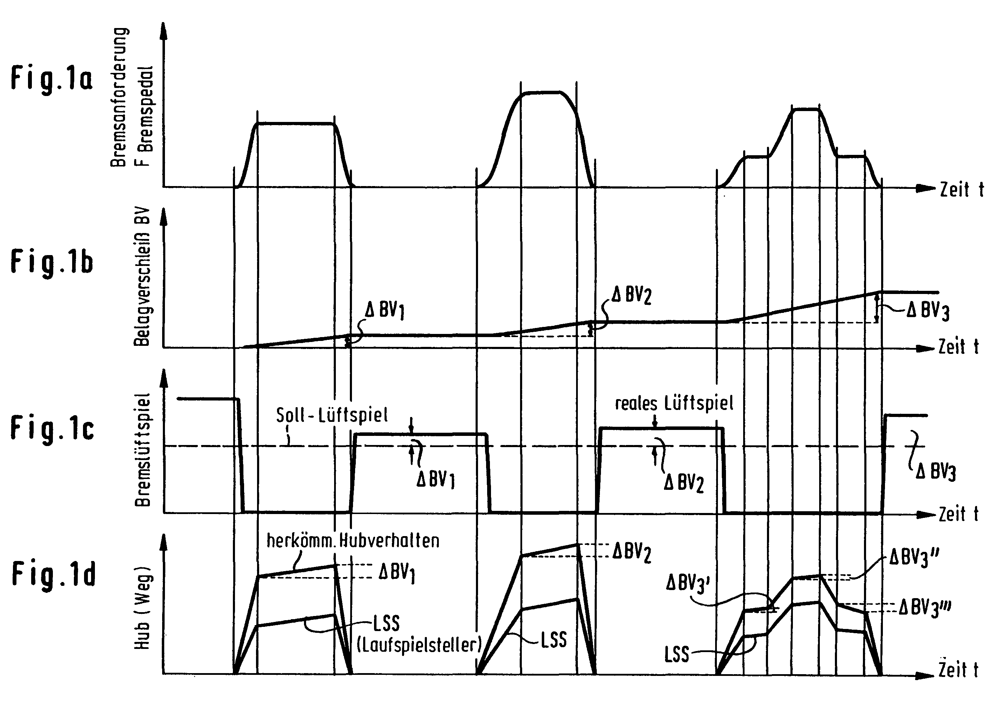

In Fig.1a sind drei verschiedene Bremsvorgänge wiedergegeben, wobei die von einem Fahrzeugführer in das Betätigungsorgan der 'Bremsanlage, z.B. in das Bremspedal eingeleitete Bremsbetätigungskraft F_{Bremspedal} in Abhängigkeit der Zeit dargestellt ist. Es ist zu erkennen, daß zunächst ein erster Bremsvorgang auf einem niedrigen Bremskraftniveau für etwas längere Zeit ausgeführt wird, während ein darauffolgender zweiter Bremsvorgang zwar zeitlich kürzer ist, jedoch auf einem höheren Bremskraftniveau stattfindet. Bei dem dritten Bremsvorgang leitet der Fahrzeugführer zunächst eine schwache Bremsung ein, bremst dann für kurze Zeit stärker und nimmt daraufhin die Bremskraft wieder auf das ursprüngliche Maß zurück, bevor der Bremsvorgang abgeschlossen wird.

In Fig.1b ist stark überhöht der sich während der drei zuvor genannten Bremsvorgänge durch Abnutzung einstellende Reibbelagverschleiß ΔBV₁, ΔBV₂ und ΔBV₃ wiedergegeben.

Fig.1c zeigt, daß zunächst ein relativ großes Bremslüftspiel vorhanden war, das beim Erkennen der hier dargestellten ersten Bremsanforderung auf Null gestellt wird. Nach Abschluß des ersten Bremsvorganges ergibt sich ein Bremslüftspiel, das dem gestrichelt dargestellten Soll-Bremslüftspiel vermehrt um den während des ersten Bremsvorgangs eingetretenen Reibbelagverschleiß entspricht. Es sei hier bemerkt, daß das durch Reibbelagverschleiß hervorgerufene, zusätzliche Bremslüftspiel im Verhältnis zum Soll-Bremslüftspiel stark überhöht dargestellt ist. In der Realität wird der während eines Bremsvorgangs eintretende Reibbelagverschleiß das Soll-Bremslüftspiel nicht signifikant erhöhen. Bei Erkennen der hier dargestellten zweiten Bremsanforderung wird das Bremslüftspiel wiederum auf Null gestellt, während es nach Beendigung des zweiten Bremsvorgangs wieder seinen Sollwert vermehrt um den Reibbelagverschleiß einnimmt. Gleiches wiederholt sich im Rahmen des dritten Bremsvorgangs.

Fig.1d zeigt deutlich, daß der für die drei dargestellten Bremsvorgänge erforderliche Hub der Betätigungsanordnung einer herkömmlichen Fahrzeugbremse im Vergleich zur erfindungsgemäß ausgestatteten Fahrzeugbremse deutlich größer ist, da die Betätigungsanordnung der herkömmlichen Fahrzeugbremse zusätzlich den zur Überwindung des Bremslüftspiels erforderlichen Hub ausführen muß.

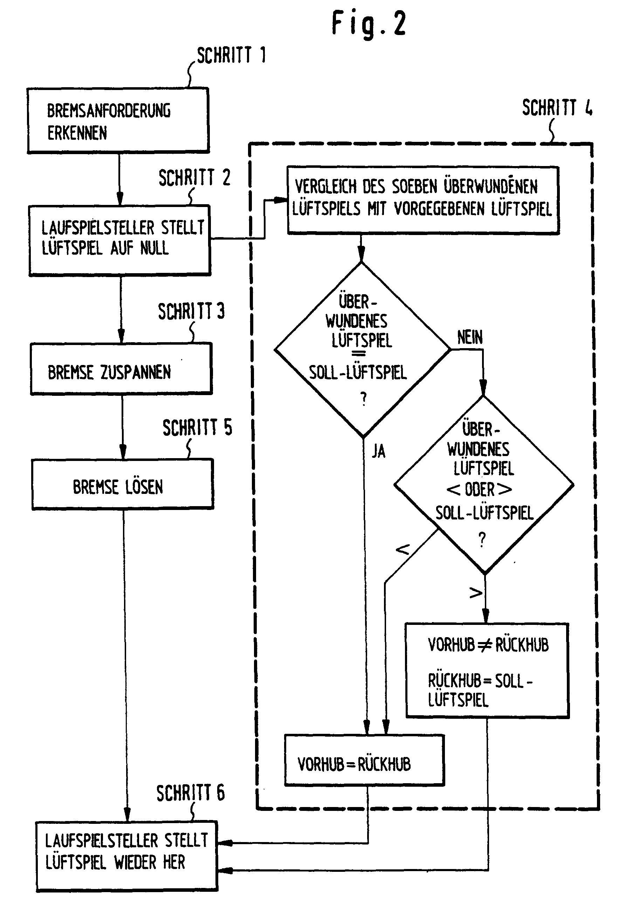

Das in Fig.2 dargestellte Ablaufschema eines Ausführungsbeispiels des erfindungsgemäßen Verfahrens zum Betreiben einer Fahrzeugbremse zeigt in übersichtlicher Form die verschiedenen Verfahrensschritte. Im ersten Schritt wird eine Fahrerbremsanforderung erkannt. Im zweiten Schritt wird das vorhandene Bremslüftspiel selbsttätig auf Null gesetzt, woraufhin im dritten Schritt die Fahrzeugbremse mittels ihrer Betätigungsanordnung zugespannt wird.

In etwa zeitgleich mit dem dritten Schritt läuft der vierte Schritt ab, in dem das soeben überwundene Bremslüftspiel mit dem Soll-Bremslüftspiel verglichen wird. Ist das aktuell überkommene Bremslüftspiel gleich dem Soll-Bremslüftspiel, so wird festgelegt, daß der Vorhub des Bremslüftspielstellers gleich dem Rückhub ist. Ist jedoch das aktuell überkommene Bremslüftspiel größer als das Soll-Bremslüftspiel, so wird festgelegt, daß der Rückhub des Bremslüftspielstellers kleiner als der zuvor durchgeführte Vorhub ist, um das Soll-Bremslüftspiel wieder einzustellen. Auf diese Weise wird der Reibbelagverschleiß ausgeglichen. Gemäß der Erfindung wird eine zum Quellen der Reibbeläge und zur thermischen Ausdehnung des abzubremsenden Bremsengliedes führende Temperaturzunahme trendmäßig erfaßt und gegebenenfalls, d.h. bei einer zu erwartenden starken Temperaturzunahme, der Rückhub größer als der zuvor durchgeführte Vorhub gewählt, um auch bei heißer Bremse sicherzustellen, daß sich die Reibbeläge und das abzubremsende Bremsenglied beim Lösen der Bremse voneinander trennen. Kühlt sich die Bremse anschließend wieder ab, so wird auch dies festgestellt und der Rückhub bei folgenden Bremsungen wieder entsprechend kleiner gewählt.

Im fünften Schritt wird die Fahrzeugbremse gelöst, woraufhin im sechsten Schritt der Bremslüftspielsteller einen Rückhub ausführt, um das gewünschte Bremslüftspiel einzustellen. Das Maß des Rückhubs hängt dabei von dem gespeicherten Ergebnis des im vierten Schritt durchgeführten Vergleichs ab.

## Patentansprüche

1. Zuspannvorrichtung für eine Fahrzeugbremse, insbesondere für eine druckluftbetätigte Trommel- oder Scheibenbremse, mit einer Betätigungsanordnung, die eine eingeleitete Bremsbetätigungskraft auf die Reibbeläge der Fahrzeugbremse überträgt, und mit einem separat betätigbaren, auf die Reibbeläge wirkenden Bremslüftspielsteller, der automatisch zu Beginn einer Bremsung durch einen Vorhub zumindest einen Teil eines zwischen den Reibbelägen und dem abzubremsenden Bremsenglied vorhandenen Bremslüftspieles überwindet und nach erfolgter Bremsung durch einen Rückhub wieder ein Soll-Bremslüftspiel einstellt,
dadurch gekennzeichnet, daß
das Maß des Rückhubs in Abhängigkeit der Temperatur der Reibbeläge und/oder der Temperatur des abzubremsenden Bremsengliedes variabel gewählt wird.

2. Zuspannvorrichtung nach Anspruch 1,
dadurch gekennzeichnet, daß der Bremslüftspielsteller eine Spreizeinheit aufweist, die mechanisch, pneumatisch, hydraulisch und/oder elektrisch betätigt wird.

3. Zuspannvorrichtung nach Anspruch 2,
dadurch gekennzeichnet, daß die Betätigung der Spreizeinheit mittels eines Druckluftzylinders, Druckluftmotors, mechanischen Getriebes, Elektromotors, Elektromagneten, Hydraulikzylinders oder Hydraulikmotors erfolgt.

4. Zuspannvorrichtung nach Anspruch 2 oder 3,
dadurch gekennzeichnet, daß die Spreizeinheit eine Spindelanordnung, eine Exzenteranordnung, eine Hebelanordnung, eine Stellkeilanordnung, eine Spindel/Mutter-Anordnung, eine Spindel/Zahnstangen-Anordnung, eine Spindel/Zahnrad-Anordnung, eine Spindel/Riemen-Anordnung oder eine Spindel/Ketten-Anordnung aufweist.

5. Zuspannvorrichtung nach einem der vorhergehenden Ansprüche,
dadurch gekennzeichnet, daß der Bremslüftspielsteller eine integrierte Reibbelag-Verschleißausgleichseinrichtung umfaßt.

6. Zuspannvorrichtung nach Anspruch 5,
dadurch gekennzeichnet, daß die Reibbelag-Verschleißausgleichseinrichtung eine Spindel/Mutter-Anordnung, eine Zahnstange, Reibschlußgleitelemente, einen Primär- und einen Sekundärkolben oder einen elektrischen Schrittmotor aufweist.

7. Zuspannvorrichtung nach einem der vorhergehenden Ansprüche,
dadurch gekennzeichnet, daß der Bremslüftspielsteller mechanisch, hydraulisch, pneumatisch, oder elektrisch oder durch eine Kombination daraus angesteuert wird.

8. Fahrzeugbremse,
gekennzeichnet durch eine Zuspannvorrichtung nach einem der vorhergehenden Ansprüche.

## Claims

1. Brake application apparatus for a vehicle brake, especially for a pneumatically-operated drum or disc brake, having an operating arrangement which transfers an initiated brake operating force to the friction linings of the vehicle brake, and having a separately operable brake air clearance adjuster which acts on the friction linings and which, at the beginning of a braking operation and by means of a pre-stroke, automatically overcomes at least a portion of a brake air clearance present between the friction linings and the brake member to be braked and, when the braking operation is complete, adjusts a nominal brake air clearance again by a return stroke, characterised in that the extent of the return stroke is variably selected in accordance with the temperature of the friction linings and/or the temperature of the brake member to be braked.

2. Brake application apparatus according to claim 1, characterised in that the brake air clearance adjuster has an expansion unit which is operated mechanically, pneumatically, hydraulically and/or electrically.

3. Brake application apparatus according to claim 2, characterised in that the operation of the expansion unit is effected by means of a pneumatic cylinder, a pneumatic motor, mechanical gearing, an electrical motor, an electromagnet, an hydraulic cylinder or an hydraulic motor.

4. Brake application apparatus according to claim 2 or 3, characterised in that the expansion unit has a spindle arrangement, an eccentric arrangement, a lever arrangement, an adjusting wedge arrangement, a spindle/nut arrangement, a spindle/toothed rack arrangement, a spindle/toothed wheel arrangement, a spindle/belt arrangement or a spindle/chain arrangement.

5. Brake application apparatus according to any one of the preceding claims, characterised in that the brake air clearance adjuster comprises an integrated friction lining wear compensation device.

6. Brake application apparatus according to claim 5, characterised in that the friction lining wear compensation device has a spindle/nut arrangement, a toothed rack, friction-locking slide elements, a primary and a secondary piston or an electrical stepping motor.

7. Brake application apparatus according to any one of the preceding claims, characterised in that the brake air clearance adjuster is controlled mechanically, hydraulically, pneumatically or electrically or by a combination thereof.

8. Vehicle brake, characterised by a brake application apparatus according to any one of the preceding claims.

## Revendications

1. Dispositif d'application pour un frein de véhicule, en particulier pour un frein à tambour ou à disque actionné par air comprimé, comprenant un agencement d'actionnement, qui transmet une force initiale d'actionnement du frein aux garnitures de friction du frein de véhicule, et un régleur de jeu d'application du frein, susceptible d'être actionné séparément et agissant sur les garnitures de friction, qui rattrape automatiquement au début d'un freinage par une pré-course, au moins une partie d'un jeu d'application du frein existant entre les garnitures de friction et l'organe de freinage assurant le freinage, et après la réalisation d'un freinage, règle à nouveau un jeu d'application du frein de consigne par une course en retour, caractérisé en ce que la grandeur de la course en retour est choisie de façon variable en fonction de la température des garnitures de friction et/ou de la température de l'organe de freinage assurant le freinage.

2. Dispositif d'application selon la revendication 1, caractérisé en ce que le régleur du jeu d'application du frein comporte une unité d'écartement, qui est actionnée mécaniquement, par voie pneumatique, hydrauliquement et/ou électriquement.

3. Dispositif d'application selon la revendication 2, caractérisé en ce que l'actionnement de l'unité d'écartement est réalisé par un vérin à air comprimé, un moteur à air comprimé, une transmission mécanique, un moteur électrique, un électro-aimant, un vérin hydraulique ou un moteur hydraulique.

4. Dispositif d'application selon la revendication 2 ou 3, caractérisé en ce que l'unité d'écartement comporte un agencement de broche, un agencement d'excentrique, un agencement de levier, un agencement de clavette de serrage, un agencement broche/écrou, un agencement broche/crémaillère, un agencement broche/roue d'engrenage, un agencement broche/courroie ou un agencement broche/chaînes.

5. Dispositif d'application selon l'une des revendications précédentes, caractérisé en ce que le régleur du jeu d'application du frein comporte un organe intégré d'équilibrage de l'usure des garnitures de friction.

6. Dispositif d'application selon la revendication 5, caractérisé en ce que l'organe d'équilibrage de l'usure des garnitures de friction comporte un agencement broche/écrou, une crémaillère, des éléments glissants entraînés par friction, un piston primaire et un piston secondaire ou un moteur électrique pas à pas.

7. Dispositif d'application selon l'une des revendications précédentes, caractérisé en ce que le régleur du jeu d'application du frein est commandé par voie mécanique, hydraulique, pneumatique ou électrique ou par une combinaison de ces voies.

8. Frein de véhicule, caractérisé par un dispositif d'application selon l'une des revendications précédentes.
